# EUROPEAN PATENT SPECIFICATION

(11) **EP 0 638 626 B1**
(45) Date of publication and mention of the grant of the patent: **28.05.1997**
(21) Application number: 94907687.1
(22) Date of filing: 25.02.1994
(51) Int. Cl.: C09K 11/78, H01J 61/44, C09K 11/81

(54) **PHOSPOR AND FLUORESCENT LAMP MADE BY USING THE SAME**
PHOSPHOR UND FLUORESZENTE LAMPE MIT DEMSELBEN
SUBSTANCE FLUORESCENTE ET LAMPE FLUORESCENTE FABRIQUEE AVEC LADITE SUBSTANCE

(30) Priority: 26.02.1993 JP 37993/93
(43) Date of publication of application: 15.02.1995
(73) Proprietor: KABUSHIKI KAISHA TOSHIBA, Kawasaki-shi, Kanagawa-ken 210 (JP)
(72) Inventor: SUGIMOTO, Yuji, Yokosuka-shi, Kanagawa 239 (JP); SHIMIZU, Youhei, Yokohama-shi, Kanagawa 233 (JP)
(74) Representative: Freed, Arthur Woolf
(86) International application number: JP9400305
(87) International publication number: WO9419422

(56) References cited:
- JP-A-56 099 276
- JP-A-58 127 777
- JP-A-63 128 094

## Description

### Technical Field:

This invention relates to a europium-activated rare earth oxide fluorescent material and fluorescent lamps using the fluorescent material, and more particularly to a red light emitting fluorescent material manifesting a high color-rendering property at high efficiency and proving to be advantageously usable usable as in three band type fluorescent lamps, for example, and fluorescent lamps using the fluorescent material.

### Background Art:

It is universally known that a europium-activated yttrium oxide fluorescent material (Y₂O₃:Eu) excels in such fluorescent properties as brightness and color of the luminescence excited by an electron beam and an ultraviolet ray and, owing to this feature, finds utility as a red light component fluorescent material for color cathode ray tubes and as a red light component fluorescent material for three band type fluorescent lamps.

Various fluxes have been heretofore studied with a view to enabling such europium-activated rare earth oxide fluorescent material as mentioned above to acquire an exalted luminescent efficiency. For example, such compounds as lithium phosphate (refer to JP-A-56-99,276), borates of alkaline earth metals (refer to JP-A-55-161,883), aluminum phosphate (refer to JP-A-58-52,382), barium borate (refer to JP-A-59-45,384), oxides of alkaline earth metals (refer to JP-A-58-127,777), and barium fluoride·magnesium fluoride (refer to JP-A-61-266,488) have been proposed as fluxes for the europium-activated yttrium oxide fluorescent material.

The fluorescent material using such a flux as mentioned above acquires a conspicuous increase in crystal size and the fluorescent lamp using this fluorescent material enjoys an exalted initial luminescent efficiency. For the reason shown hereinbelow, however, the fluorescent lamp entails the problem that the luminescent efficiency thereof gradually dwindles with the elapse of the lighting time thereof.

The process for the manufacture (synthesis) of an ordinary fluorescent material includes a step of washing. The conventional flux is normally removed at this step of washing. In the case of the fluorescent material which is produced with such a flux as mentioned above, the decline of the luminescent efficiency with the elapse of the lighting time of the lamp may be logically explained by a postulate that a minute amount of this flux will remain therein after the washing step and the residual flux will gradually react with such component substances of the fluorescent lamp as glass and mercury.

When the red light fluorescent material has the luminescent efficiency thereof degraded by aging as described above, this degradation results in a decline of the luminescent brightness for the fluorescent lamp. In the three band type fluorescent lamp, the degradation entails an alteration of the luminescent chromaticity and inevitably impairs the quality of the fluorescent lamp seriously.

An object of this invention is to provide a red light fluorescent material which possesses high initial luminescent brightness (efficiency) and causes only a small degradation in the efficiency of the fluorescent lamp while in use. Another object of this invention is to provide a fluorescent lamp which uses this fluorescent material and consequently manifests high color-rendering property and high luminescent brightness while repressing the alteration of luminescent brightness and luminescent chromaticity by aging.

### Disclosure of the Invention:

The present inventors performed various studies on this problem of the residual flux for the purpose of improving the luminescent efficiency of the europium-activated rare earth oxide fluorescent material and further preventing the luminescent efficiency from being degraded by aging. As a result, it has been ascertained that when phosphorus and an alkaline earth metal are simultaneously contained at fixed rates, they prevent the residual flux from reacting with the component substances of the fluorescent lamp and greatly diminish or eliminate the degradation of the luminescent efficiency of the europium-activated rare earth oxide fluorescent material due to the elapse of the lighting time.

This invention has been perfected based on the knowledge mentioned above. The fluorescent material of this invention is a europium-activated rare earth oxide fluorescent material substantially represented by the general formula:

(L₁₋ₓEuₓ)₂O₃ (1)

(wherein L stands for at least one element selected from among the rare earth elements and x for a numerical value falling in the range of 0.01 ≤ x ≤ 0.20) and characterized by containing phosphorus and at least one alkaline earth metal selected from among magnesium, calcium, strontium, and barium, each at a ratio in the range of from 10⁻⁶ to 10⁻³ mol, per mol of the europium-activated rare earth oxide fluorescent material mentioned above.

The fluorescent lamp of this invention is a fluorescent lamp which is provided with a fluorescent material layer formed as deposited on the inner wall surface of a glass tube and is characterized in that the fluorescent material layer contains at least as a red light component thereof a fluorescent material containing phosphorus and at least one alkaline earth metal selected from among magnesium, calcium, strontium, and barium, each at a ratio in the range of from 10⁻⁶ to 10⁻³ mol, per mol of the europium-activated rare earth oxide substantially represented by the formula (1) mentioned above.

The fluorescent material of this invention is basically formed of a rare earth oxide fluorescent material activated with trivalent europium. The reference symbol L used in the formula (1) mentioned above represents rare earth elements including yttrium. Specifically, it stands for at least one rare earth element selected from among yttrium (Y), gadolinium (Gd), lanthanum (La), and lutecium (Lu). The content of europium in the europium-activated rare earth oxide fluorescent material, as the value of x in the formula (1) mentioned above, is in the range of from 0.01 to 0.20. If the europium content is less than 0.01 as the value of x, the concentration of the activating agent is unduly low and the luminescent intensity is insufficient. If this content exceeds 0.20, the luminescent brightness is degraded by concentration quenching.

For the fluorescent material of this invention, the ratios of the contents of phosphorus and the alkaline earth metal to the amount of the rare earth oxide fluorescent material activated with trivalent europium as represented by the formula (1) mentioned above constitute one important factor. It is important that phosphorus and the alkaline earth metal should be simultaneously contained each at a proportion in the range of from 10⁻⁶ to 10⁻³ mol per mol of the fluorescent material mentioned above.

If the content of either phosphorus or the rare earth metal is smaller than 10⁻⁶ mol per mol of the europium-activated rare earth oxide fluorescent material, the initial luminescent brightness will be unduly low. If the content of either of the two elements under consideration exceeds 10⁻³ mol, the decline of the luminescent efficient will exacerbate. By causing the contents of phosphorus and the alkaline earth metal each to fall in the range of from 10⁻⁶ to 10⁻³ mol per mol of the fluorescent material, a stable compound is produced between the phosphorus and the alkaline earth metal to permit satisfaction of high luminescent brightness and repression of the degradation of luminescent efficiency by aging as well. More desirably, the contents of phosphorus and the alkaline earth metal each fall in the range of from 10⁻⁶ to 10⁻⁴ mol per mol of the europium-activated rare earth oxide fluorescent material mentioned above.

The effect of the simultaneous addition of phosphorus and the alkaline earth metal mentioned above can be attained so long as this alkaline earth metal is at least one member selected from among magnesium, calcium, strontium, and barium. In these alkaline earth metals, barium and calcium prove particularly desirable from the viewpoint of initial luminescent brightness and alteration of luminescent brightness by aging.

The red light fluorescent material of this invention can be produced as follows, for example.

First, the starting materials such as a rare earth element oxide like yttrium oxide and various additive components are prepared. The europium sources usable herein include europium oxide and europium carbonate and the phosphorus sources include phosphates and hydrogen phosphates of such alkaline earth metals as Mg, Ca, Sr, and Ba. The alkaline earth metal sources usable herein include oxides, hydroxides, and carbonates of alkaline earth metals which are easily converted at elevated temperatures into oxides of alkaline earth metals.

Then these starting materials are weighed out so as to satisfy stoichiometrically the formula (1) mentioned above and, at the same time, satisfy the condition that 10⁻⁶ to 10⁻³ mol of phosphorus and 10⁻⁶ to 10⁻³ mol of the alkaline earth metal should be simultaneously contained per mol of a europium-activated rare earth oxide fluorescent material represented by the formula (1) mentioned above and are then thoroughly mixed to obtain a mixture as a raw material for the fluorescent material. This mixing may be carried out in a wet state by the use of a ball mill, a mixer mill, or a mortar or in a dry state by the use of water or alcohol.

The fluorescent material of this invention may be enabled to contain therein phosphorus and an alkaline earth metal by positively adding a phosphorus source and an alkaline earth metal source as starting materials in the process for manufacture of a europium-activated rare earth oxide fluorescent material. Alternatively, phosphorus and an alkaline earth metal may be added to form a flux in the europium-activated rare earth oxide fluorescent material and their residual amounts after the washing step may be adjusted. To be specific, a phosphorus-containing flux selected from among phosphorus oxide (P₂O₃), lithium phosphate, and aluminum phosphate and an alkaline earth metal-containing flux selected from among borates, fluorides, and oxides of alkaline earth metals are added to the mixture as the raw material for the fluorescent material and adjusting the amounts of these fluxes to be added and the process of manufacture so that phosphorus and an alkaline earth metal may be contained in the ranges mentioned above in the finally produced fluorescent material. Otherwise, the manufacture of the fluorescent material of this invention may be implemented by using either of the fluxes mentioned above per se and, at the same time, adding the remainder reflux to the starting materials. Then, the mixture as the raw material for the fluorescent material mentioned above is packed in a refractory vessel such as an alumina crucible or a quartz crucible and subjected to firing therein. This firing is carried out once or twice or more times in air (oxidative atmosphere), a neutral atmosphere such as an atmosphere of nitrogen gas or an atmosphere of argon gas, or a reducing atmosphere such as an atmosphere of nitrogen gas containing a small amount of hydrogen gas at a temperature in the range of from 1000°C to 1350°C, preferably from 1200°C to 1300°C. The firing time is variable with such factors as the amount of the mixture as the raw material for the fluorescent material to be packed in the refractory vessel and the firing temperature. Generally, when the firing temperature is in the range mentioned above, the firing time which proves proper is in the range of from 0.5 to 6 hours, preferably from 1 to 4 hours. After the firing, the fired process is pulverized, washed (as with water, a weak mineral acid, a weak alkali, or a weak organic acid), dried, and classified by the use of a sieve as generally practiced in the process for manufacture of a fluorescent material. Thus, the fluorescent material of this invention is obtained.

The fluorescent lamp of this invention is possessed of a fluorescent material layer containing at least as a red luminescent component the fluorescent material of this invention described above. This fluorescent material layer may be formed solely of the fluorescent material of this invention. It may be otherwise formed of a mixed fluorescent material consisting of a red light fluorescent material of this invention with a red light fluorescent material and a green light fluorescent material or a mixed fluorescent material optionally further incorporating therein a deep red light fluorescent material and a bluish green light fluorescent material. The fluorescent material layer may be used in various forms.

The fluorescent lamp of this invention is particularly suitable for the so-called three band type fluorescent lamp which uses such a mixed fluorescent material as mentioned above. When it is utilized for the three band type fluorescent lamp of the kind mentioned above, various blue light fluorescent materials and green light fluorescent materials heretofore known to the art may be used besides the red light fluorescent material of this invention.

### Brief Description of the Drawings:

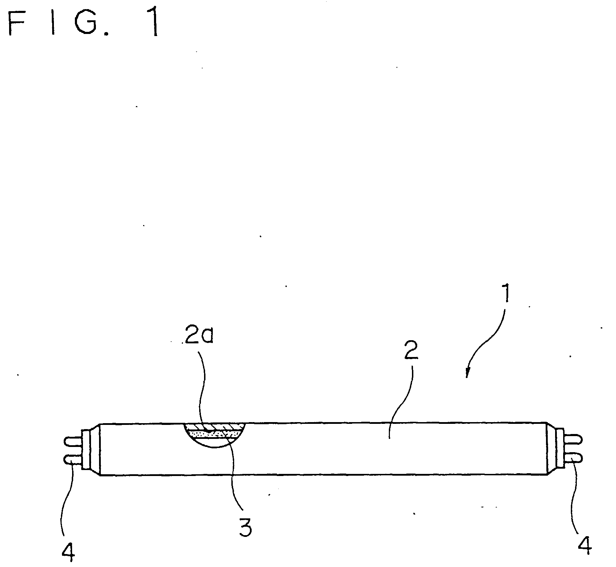

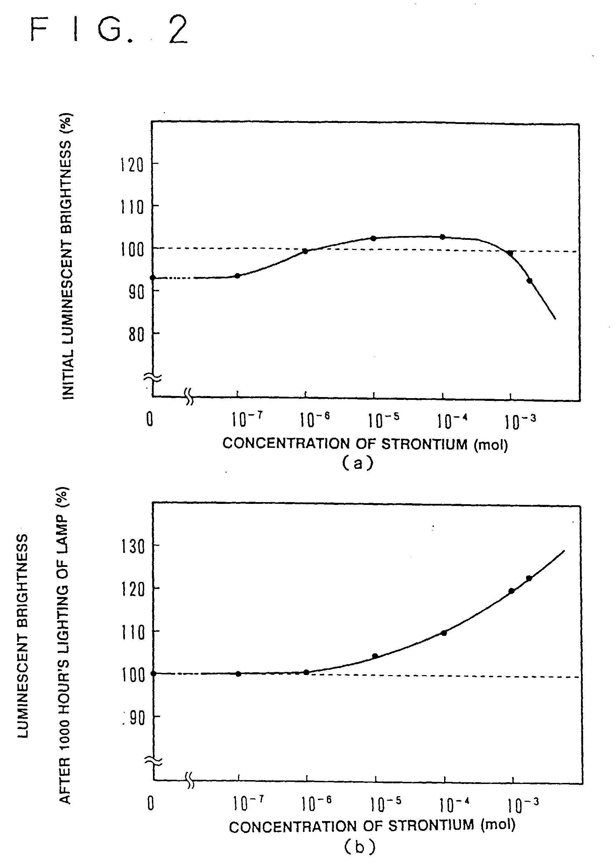

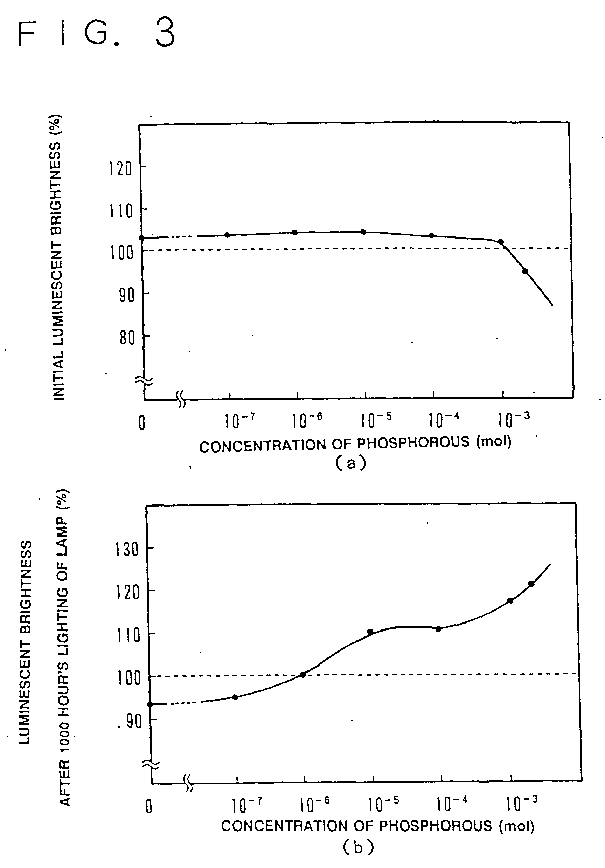

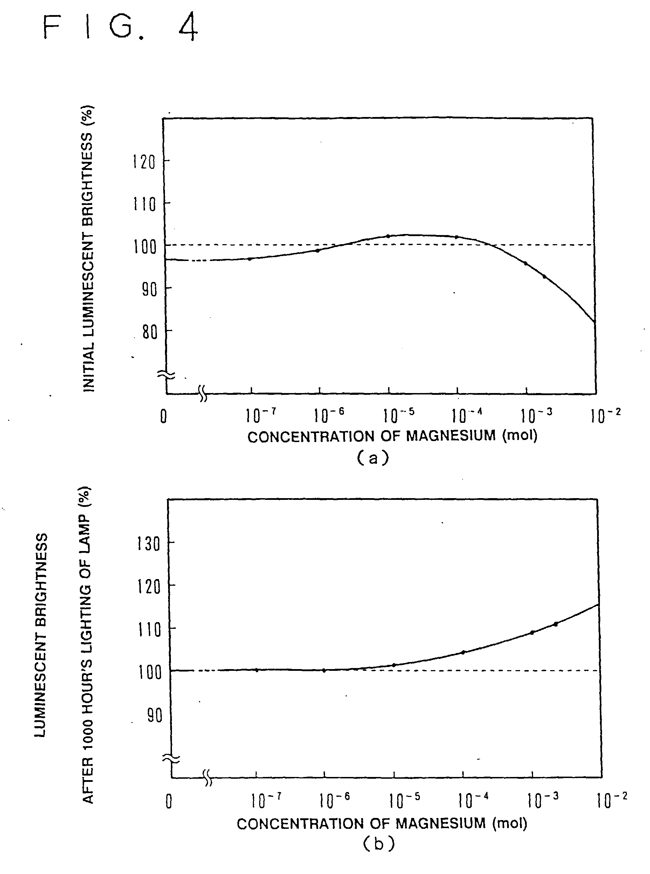

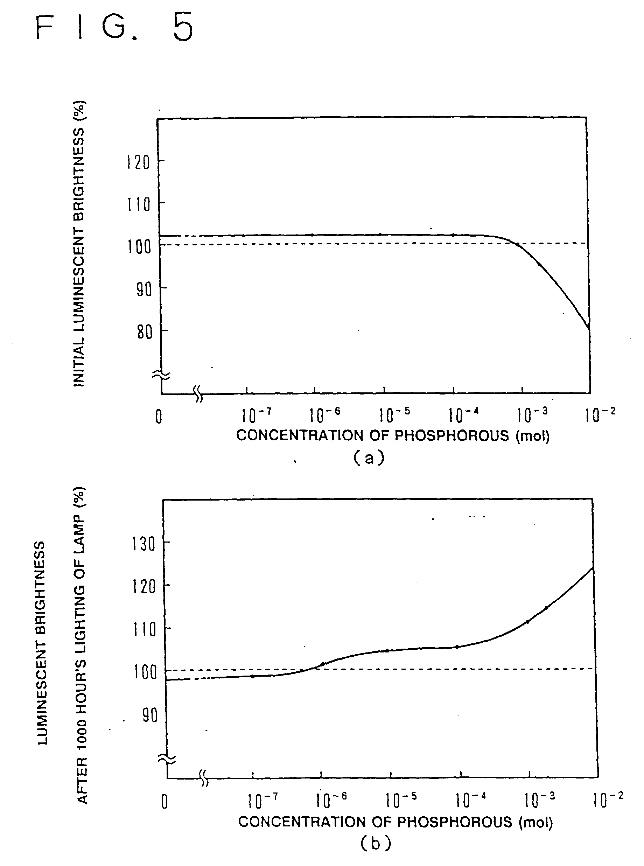

Fig. 1 is a partially cutaway view showing the construction of a fluorescent lamp manufactured in a working example of this invention, Fig. 2 is a diagram of graphs showing the characteristics of fluorescent lamps using fluorescent materials obtained in working examples of this invention and comparative examples; the graph (a) showing the relation between the strontium concentration of a europium-activated yttrium oxide fluorescent material containing 10⁻⁵ mol of phosphorus and the initial luminescent brightness of the fluorescent material and the graph (b) similarly showing the relation between the strontium concentration and the luminescent brightness after 1000 hours' lighting of the lamp, Fig. 3 is a diagram of graphs showing the characteristics of fluorescent lamps using fluorescent materials obtained in other working examples of this invention and other comparative examples; the graph (a) showing the relation between the phosphorus concentration of a europium-activated yttrium oxide fluorescent material containing 10⁻⁵ mol of barium and the initial luminescent brightness of the fluorescent material and the graph (b) similarly showing the phosphorus concentration and the luminescent brightness after 1000 hours' lighting of the lamp, Fig. 4 is a diagram of graphs showing the characteristics of fluorescent lamps using fluorescent materials obtained in yet other working examples of this invention and yet other comparative examples; the graph (a) showing the relation between the magnesium concentration of a europium-activated yttrium oxide fluorescent material containing 10⁻⁵ mol of phosphorus and the initial luminescent brightness of the fluorescent material and the graph (b) similarly showing the relation between the magnesium concentration and the luminescent brightness after 1000 hours' lighting of the lamp, and Fig. 5 is a diagram of graphs showing the characteristics of fluorescent lamps using fluorescent materials obtained in still other working examples of this invention and still other comparative examples; the graph (a) showing the relation between the phosphorus concentration of a europium-activated yttrium oxide fluorescent material containing 10⁻⁵ mol of calcium and the initial luminescent brightness of the fluorescent material and the graph (b) similarly showing the relation between the phosphorus concentration and the luminescent brightness after 1000 hours' lighting of the lamp.

### Mode for Embodying the Invention:

Now, the present invention will be described below with reference to working examples.

### Examples 1 to 4:

For the manufacture of europium-activated yttrium oxide fluorescent materials represented by the composition formula, (Y_{0.95}Eu_{0.05})₂O₃, phosphorus sources and strontium sources were mixed at suitable ratios with starting materials to obtain a plurality of fluorescent materials having a fixed phosphorus concentration and a varying strontium concentration.

Specifically, 214.7 g of yttrium oxide [Y₂O₃] and 17.6 g of europium oxide [Eu₂O₃] were weighed out and combined with 0.015 g of ammonium phosphate [(NH₄)₃HPO₄] and further with a varying amount of strontium oxide [SrO] and they were thoroughly mixed. Then, the resultant mixture was packed in an alumina crucible and fired therein in an oxidizing atmosphere at 1350°C. The fired process consequently obtained was subjected to such ordinary treatments as pulverization, dispersion, washing, drying, and classification with a sieve to obtain a fluorescent material. Thus, phosphorus was contained in a fixed proportion of 10⁻⁵ mol and strontium was contained in varying proportions of 10⁻⁷ mol (Comparative Example 1), 10⁻⁶ mol (Example 1), 10⁻⁵ mol (Example 2), 10⁻⁴ mol (Example 3), 10⁻³ mol (Example 4), and 2 x 10⁻³ mol (Comparative Example 2), respectively per mol of the europium-activated yttrium oxide fluorescent material represented by the composition formula mentioned above.

Then, fluorescent lamps (FL20SS/18) of a construction shown in Fig. 1 were produced by an ordinary method using the various fluorescent materials which were obtained in Examples 1 to 4 and Comparative Examples 1 and 2. In a fluorescent lamp 1 shown in Fig. 1, a fluorescent material layer 3 was formed as deposited on an inner wall surface 2a of a glass bulb 2. A discharge gas of a prescribed pressure, namely a mixed gas of mercury with such a rare gas as argon, was sealed in the glass bulb 2. Electrodes 4 were attached one each to opposite end parts of the glass bulb 2. By the application of a prescribed voltage between these electrodes 4, the fluorescent material layer 3 was caused by an excitation source to emit light.

The various fluorescent lamps obtained as described above were tested for initial luminescent brightness and for luminescent brightness after 1000 hours' lighting of the lamps. The results of the test are shown in Fig. 2 (a) and (b). The magnitudes of luminescent brightness indicated in these graphs represent relative values (%) determined based on the luminescent brightness of the europium-activated yttrium oxide fluorescent material including neither phosphorus nor strontium [(Y_{0.95}Eu_{0.05})₂O₃] taken as 100.

It is clearly noted from the graphs of Fig. 2 that the strontium concentration is desired to be not more than 10⁻³ mol from the viewpoint of the initial luminescent brightness and to be not less than 10⁻⁶ mol from the viewpoint of the luminescent brightness respectively, per mol of the europium-activated yttrium oxide fluorescent material. It is also confirmed that fluorescent lamps excelling in both initial luminescent brightness and luminescent brightness after 1000 hours' lighting of lamp are obtained by using fluorescent materials of the working examples simultaneously containing 10⁻⁵ mol of phosphorus and 10⁻⁶ to 10⁻³ mol of strontium.

### Examples 5 to 8:

Fluorescent materials containing barium at a fixed proportion of 10⁻⁵ mol and phosphorus at varying proportions of 10⁻⁷ mol (Comparative Example 3), 10⁻⁶ mol (Example 5), 10⁻⁵ mol (Example 6), 10⁻⁴ mol (Example 7), 10⁻³ mol (Example 8), and 2 x 10⁻³ mol (Comparative Example 4), respectively per mol of a europium-activated yttrium oxide fluorescent material of the composition formula, (Y_{0.94}Eu_{0.06})₂O₃, were prepared by suitably adjusting the mixing rations of various starting materials and following the procedure of Example 1.

Then, fluorescent lamps (FL20SS/18) similar to those of Example 1 were produced by an ordinary method using the fluorescent materials which were obtained in Examples 5 to 8 and Comparative Examples 3 and 4. These fluorescent lamps were tested for initial luminescent brightness and luminescent brightness after 1000 hours' lighting of lamp. The results of the test are shown in Fig. 3 (a) and (b). The magnitudes of luminescent brightness indicated in these graphs represent the relative values (%) determined based on the luminescent brightness of a conventional europium-activated yttrium oxide fluorescent material including neither phosphorus nor strontium [(Y_{0.94}Eu_{0.06})₂O₃] taken as 100.

It is clearly noted from the graphs of Fig. 3 that fluorescent lamps excelling in both initial luminescent brightness and luminescent brightness after 1000 hours' lighting of lamp are obtained by using fluorescent materials of the working examples simultaneously containing 10⁻⁵ mol of barium and 10⁻⁶ to 10⁻³ mol of phosphorus per mol of the europium-activated yttrium oxide fluorescent material.

### Examples 9 to 12:

Fluorescent materials containing phosphorus at a fixed proportion of 10⁻⁵ mol and magnesium at varying proportions of 10⁻⁷ mol (Comparative Example 5), 10⁻⁶ mol (Example 9), 10⁻⁵ mol (Example 10), 10⁻⁴ mol (Example 11), 10⁻³ mol (Example 12), and 2 x 10⁻³ mol (Comparative Example 6), respectively per mol of a europium-activated yttrium oxide fluorescent material represented by the composition formula, (Y_{0.95}Eu_{0.05})₂O₃, by suitably adjusting the mixing ratios of the various starting materials and following the procedure of Example 1.

Then, fluorescent lamps (FL20SS/18) similar to those of Example 1 were produced by an ordinary method using the various fluorescent materials which were obtained in Examples 9 to 12 and Comparative Examples 5 and 6. These fluorescent lamps were tested for initial luminescent brightness and luminescent brightness after 1000 hours' lighting of lamp. The results of the test are shown in Fig. 4 (a) and (b). The magnitudes of luminescent brightness indicated in the graphs represent the relative values (%) determined based on the luminescent brightness of a conventional europium-activated yttrium oxide fluorescent material containing neither phosphorus nor magnesium [(Y_{0.95}Eu_{0.05})₂O₃] taken as 100.

It is clearly noted from the graph of Fig. 4 that fluorescent lamps excelling in both initial luminescent brightness and luminescent brightness after 1000 hours' lighting of lamp are obtained by using fluorescent materials of the working examples simultaneously containing 10⁻⁵ mol of phosphorus and 10⁻⁶ to 10⁻³ mol of magnesium per mol of the europium-activated yttrium oxide fluorescent material.

### Examples 13 to 16:

Fluorescent materials containing calcium at a fixed proportion of 10⁻⁵ mol and phosphorus at varying proportions of 10⁻⁷ mol (Comparative Example 7), 10⁻⁶ mol (Example 13), 10⁻⁵ mol (Example 14), 10⁻⁴ mol (Example 15), 10⁻³ mol (Example 16), and 2 x 10⁻³ mol (Comparative Example 8), respectively per mol of a europium-activated yttrium oxide fluorescent material represented by the composition formula, (Y_{0.93}Eu_{0.07})₂O₃, by suitably adjusting the mixing ratios of the various starting materials and following the procedure of Example 1.

Then, fluorescent lamps (FL20SS/18) similar to those of Example 1 were produced by an ordinary method using the various fluorescent materials which were obtained in Examples 13 to 16 and Comparative Examples 7 and 8. These fluorescent lamps were tested for initial luminescent brightness and luminescent brightness after 1000 hours' lighting of lamp. The results of the test are shown in Fig. 5 (a) and (b). The magnitudes of luminescent brightness indicated in the graphs represent the relative values (%) determined based on the luminescent brightness of a conventional europium-activated yttrium oxide fluorescent material containing neither phosphorus nor calcium [(Y_{0.93}Eu_{0.07})₂O₃] taken as 100.

It is clearly noted from the graph of Fig. 5 that fluorescent lamps excelling in both initial luminescent brightness and luminescent brightness after 1000 hours' lighting of lamp are obtained by using fluorescent materials of the working examples simultaneously containing 10⁻⁵ mol of calcium and 10⁻⁶to 10⁻³ mol of phosphorus per mol of the europium-activated yttrium oxide fluorescent material.

### Example 17:

A europium-activated gadolinium oxide fluorescent material represented by the composition formula, (Gd_{0.95}Eu_{0.05})₂O₃, was prepared by the same method as used in Example 2 so as to contain 10⁻⁵ mol of phosphorus and 10⁻⁶ mol of strontium therein per mol of the europium-activated gadolinium oxide fluorescent material.

A fluorescent lamp (FL20SS/18) similar to that of Example 1 was produced by an ordinary method using the fluorescent material consequently obtained and then tested for initial luminescent brightness and luminescent brightness after 1000 hours' lighting of lamp. The test yielded satisfactory results, 102 and 103, respectively based on the luminescent brightness of a conventional europium-activated yttrium oxide fluorescent material [(Gd_{0.95}Eu_{0.05})₂O₃] containing neither phosphorus nor strontium taken as 100.

It is clearly noted from this working example that a fluorescent lamp excelling in both initial luminescent brightness and luminescent brightness after 1000 hours' lighting of lamp is obtained by causing an europium-activated gadolinium oxide fluorescent material to contain both phosphorus and strontium.

### Example 18:

By the same method as used in Example 2, a europium-activated rare earth oxide fluorescent material represented by the composition formula, (Y_{0.8}Gd_{0.15}Eu_{0.05})₂O₃, was prepared so as to contain 10⁻⁵ mol of phosphorus and 10⁻⁶ mol of strontium per mol of the europium-activated rare earth oxide fluorescent material.

A fluorescent lamp (FL20SS/18) similar to that of Example 1 was produced by using the fluorescent material consequently obtained and then tested for initial luminescent brightness and luminescent brightness after 1000 hours' lighting of lamp. The test yielded satisfactory results, 101 and 102, respectively based on the luminescent brightness of a conventional europium-activated yttrium oxide fluorescent material [(Y_{0.8}Gd_{0.15}Eu_{0.05})₂O₃] containing neither phosphorus nor strontium taken as 100.

It is clearly noted from this working example that a fluorescent lamp excelling in both initial luminescent brightness and luminescent brightness after 1000 hours' lighting of lamp is obtained by causing an europium-activated rare earth oxide fluorescent material to contain both phosphorus and strontium.

The working examples cited above represent cases of applying this invention to rare earth oxide fluorescent materials using yttrium oxide and gadolinium oxide, for instance. The same effect of this invention as described above is attained in rare earth oxide fluorescent materials using lanthanum oxide (La₂O₃), lutecium oxide (Lu₂O₃), and mixed crystals thereof [such as, for example, (Y_{0.9}La_{0.1})₂O₃].

### Industrial Applicability:

As described above, this invention allows provision of a red light fluorescent material which manifests high luminescent brightness and suffers from only slight decline of luminescent brightness of lighting lamp by aging. By using this fluorescent material as a red luminescent component in a three band type fluorescent lamp, a fluorescent lamp which not only manifests high luminescent brightness but also excels in stability of lighting lamp to resist the effect of aging can be realized.

## Claims

1. A europium-activated rare earth oxide fluorescent material substantially represented by the general formula: (L₁₋ₓEuₓ)₂O₃
(wherein L stands for at least one element selected from among rare earth elements and x for a numerical value in the range of 0.01 ≤ x ≤ 0.20) and containing phosphorus and at least one alkaline earth metal selected from among magnesium, calcium, strontium, and barium, each in an amount in the range of from 10⁻⁶ to 10⁻³ mol-per mol of the europium-activated rare earth oxide fluorescent material.

2. A fluorescent material according to claim 1, wherein the rare earth element L is at least one element selected from among yttrium, gadolinium, lanthanum, and lutecium.

3. A fluorescent lamp provided with a fluorescent material layer formed as deposited on the inner wall surface of a glass tube and characterized in that the fluorescent material layer contains as at least a red luminescent component thereof a europium-activated rare earth oxide fluorescent material according to claim 1.

## Patentansprüche

1. Mit Europium aktivierter Seltenerdoxid-Leuchtstoff, der im wesentlichen durch die Formel:
(L₁₋ₓEuₓ)₂O₃
dargestellt wird (wobei L für mindestens ein Element steht, das unter Seltenerdelementen ausgewählt ist, und x einen Zahlenwert im Bereich von 0,01 ≤ x ≤ 0,20 bedeutet), und der Phosphor und mindestens ein Erdalkalimetall enthält, das unter Magnesium, Calcium, Strontium und Barium ausgewählt ist, jeweils in einem Anteil im Bereich von 10⁻⁶ bis 10⁻³ Mol pro Mol des mit Europium aktivierten Seltenerdoxid-Leuchtstoffs.

2. Leuchtstoff nach Anspruch 1, wobei das Seltenerdelement L mindestens ein unter Yttrium, Gadolinium, Lanthan und Lutetium ausgewähltes Element ist.

3. Leuchtstofflampe mit einer durch Aufbringen an der inneren Wandoberfläche einer Glasröhre ausgebildeten Leuchtstoffschicht, dadurch gekennzeichnet, daß die Leuchtstoffschicht als mindestens eine rot lumineszierende Komponente einen mit Europium aktivierten Seltenerdoxid-Leuchtstoff gemäß Anspruch 1 enthält.

## Revendications

1. Matériau fluorescent d'oxyde de terre rare activé à l'europium représenté sensiblement par la formule générale:
(L₁₋ₓEuₓ)₂O₃
(dans laquelle L signifie au moins un élément choisi parmi les éléments terres rares et x une valeur numérique dans la plage de 0,01 ≤ x ≤ 0,20) et contenant du phosphore et au moins un métal alcalino-terreux choisi parmi le magnésium, le calcium, le strontium et le baryum, chacun dans une quantité dans la plage de 10⁻⁶ à 10⁻³ mole par mole du matériau fluorescent d'oxyde de terre rare activé à l'europium.

2. Matériau fluorescent selon la revendication 1, dans lequel l'élément terre rare L est au moins un élément choisi parmi l'yttrium, le gadolinium, le lanthane et le lutécium.

3. Lampe fluorescente pourvue d'une couche d'un matériau fluorescent formée telle que déposée sur la surface de la paroi interne d'un tube en verre et caractérisé en ce que la couche du matériau fluorescent contient comme au moins un composant à luminescence rouge un matériau fluorescent d'oxyde de terre rare activé à l'europium selon la revendication 1.
